# EUROPEAN PATENT APPLICATION

(11) **EP 1 113 211 A2**
(43) Date of publication of application: **04.07.2001**
(21) Application number: 00830221.8
(22) Date of filing: 23.03.2000
(51) Int. Cl.: F16M 7/00

(54) **A process for manufacturing a support foot for heavy objects, particularly for machines such as belt conveyors**

(30) Priority: 30.12.1999 EP 99830815
(71) Applicant: Rexnord Marbett S.p.A., 42015 Correggio (Reggio Emilia) (IT)
(72) Inventor: Bellini, Emanuele, 41037 Mirandola (Modena) (IT); Mondello, Piero, 40037 Sasso Marconi (Bologna) (IT)
(74) Representative: Maccalli, Marco

(57) **Abstract**

Process for manufacturing a support foot for heavy objects which comprises a base block (3; 3a, 3b) designed to rest on a support surface and having a sole (11) made of a synthetic material and produced by injection moulding the synthetic material onto a bottom surface of the base block.

## Description

The present invention relates to a process for manufacturing a support foot for heavy objects, particularly for machines such as belt conveyors.

Support feet of the type mentioned above generally consist of a stem attached at one end to a base block which is designed to rest on a support surface, for example the ground. The other end of the stem is attached, usually by means of screwing so as to enable the foot height to be adjusted, to the heavy object that needs to be supported, for example a machine such as a belt conveyor, and particularly to its frame.

Depending on the maximum supportable load, deemed to be the load applied to the stem of the foot which corresponds to the elastic deformability limit of the said foot, support feet having plastic or steel stems of various diameters and base blocks which are also made of plastic or steel are available on the market.

Support feet having steel stems and base blocks are generally able to support greater maximum loads than those that can be supported by feet having plastic stems and base blocks or by feet having steel stems and plastic base blocks. However, all-steel feet are more expensive and their higher cost is not justified in many applications which do not have stringent specifications with regard to the maximum supportable load.

A pad or sole made of a synthetic material, typically an elastomeric material such as rubber, for example, is then attached to the underside of the base block and fulfils the dual function of preventing the foot from sliding on the support surface and of absorbing vibrations from the machine which are transmitted to the base block via the stem.

The anti-slip sole is made as a separate piece to the base block and is attached to the latter by means of a fitting coupling, for example by providing an undercut in the bottom surface of the base block or in the sole. In other words, the sole is manufactured separately from the base block and is subsequently mounted on the latter.

The drawback to this technique is that, in addition to having a negative impact on the time required to assemble the support feet, there is not the slightest guarantee that the sole will remain securely fixed to the base block.

In fact, the latter consideration is of considerable importance because what could happen is that the heavy object supported by the support foot, for example the machine, is moved by sliding it along the ground or the support surface. This clearly subjects the sole of the support foot to stresses which tend to cause it to become detached from the base block. As a result of the material used to make the sole and due to the load applied to it, the sole tends to adhere to the ground or support surface, this adhesion getting worse over time as a result of the action of various environmental factors such as dirt, grease and the cleaning products used in the areas in which the machines are located, etc. The consequence of all this is that the sole becomes detached from the base block, a phenomenon most unwelcome to the users concerned.

The problem of the sole becoming detached from the base block is not effectively solved even with the use of adhesives which, in addition to the fitting coupling or as an alternative thereto, are used to mount the sole onto the base block, as the adhesive properties of these adhesives degrade over time. Also, the use of adhesives increases the production costs of the support feet, both as a result of the inherent additional cost of the adhesive itself and because most adhesives require rather long setting times.

In view of the prior art as described, it has been an object of the present invention to provide a process for manufacturing a support foot for heavy objects which does not exhibit the disadvantages mentioned above.

In accordance with the present invention, this object has been achieved by a process for manufacturing a support foot for heavy objects which comprises a base block designed to rest on a support surface and having a sole made of a synthetic material, characterized by providing for making the sole by injection moulding the synthetic material onto a bottom surface of the base block.

The features and advantages of the present invention will become clear from the following detailed description of a possible practical embodiment thereof, which description is provided purely by way of non-limiting example and in conjunction with the appended drawings, in which:
Figure 1 is a sectional view taken on a vertical plane through a support foot made using a manufacturing process according to the present invention; and
Figures 2 to 7 are diagrammatic illustrations of a possible practical embodiment of the manufacturing process according to the present invention.

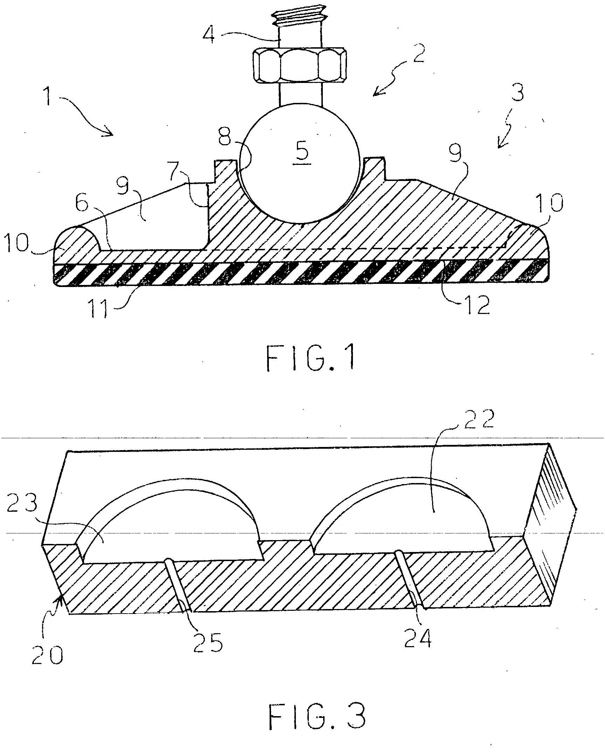

With reference to Figure 1, the latter shows a section taken on a vertical plane of a possible embodiment of a support foot for heavy objects manufactured using the process according to the present invention. In particular, the example shown in Figure 1 relates to a support foot having a steel stem and a synthetic base block and of articulated type - i.e. one in which the coupling between the stem and the base block is such as to allow these two components to be angularly adjusted relative to each other.

The support foot, globally indicated by reference 1, comprises - in a known manner - a stem 2 and a base block 3. The stem 2 comprises a rod 4 which is threaded externally so that it can be coupled to the heavy object to be supported, for example to the frame of a machine such as a belt conveyor. The stem 2 also comprises a head 5 at one end of the rod 4, this head being generically enlarged, in particular of spherical shape.

The base block 3 comprises a body, for example of circular shape in plan view but which can in general be of other shapes, made as a single piece of synthetic material. The particular type of synthetic material used to make the base block 3 depends on the load that the support foot is intended to support; for example, glass- filled polyamide would be a suitable material.

The base block 3 is shaped so as to have a base 6 and an annular wall 7 which extends up from the base 6 approximately in the centre of the said base 6. The annular wall 7, which is cylindrical in the example, defines and encloses a seat 8 which is open at the top, closed around the sides by the annular wall 7 and essentially hemispherical at the bottom, its dimensions matching those of the head 5 of the stem 2.

A series of ribs 9, which in the example illustrated are arranged in a spoke configuration and decrease in height relative to the base 6 as they extend towards the outer edge of the base block 3, are formed around the periphery of the annular wall 7 and connect the external surface of the annular wall 7 to a bead 10 which stands proud around the periphery of the base 6 of the base block. The ribs 9 act as reinforcing members and transmit onto the base 6, and therefore onto the ground or the support surface in general, the loads transmitted by the stem, via the head, onto the base block, thus helping to increase the rigidity of the support foot.

A sole 11 made of rubber, or more generally of elastomeric material, is attached to the bottom surface 12 of the base 6 of the base block 3, its purpose being to prevent the foot from slipping on the support surface and to absorb vibrations from the machine which are transmitted to the base block via the stem.

In accordance with the present invention, the sole 11 is attached to the bottom surface 12 of the base block 3 by means of an injection-moulding process which involves moulding the elastomeric material onto the base block 3.

The moulding operation can for example involve an overmoulding process, which means that an elastomeric material is applied by means of injection moulding on top of a previously manufactured component. The previously manufactured component, i.e. the base block 3, is placed in a suitable mould and the elastomeric material is then injected into the mould in the liquid phase. The base block 3 can in turn have been produced beforehand by means of a process for moulding a synthetic material, or in any other way.

Alternatively, if the appropriate equipment is available, the base block 3 with the sole 11 attached can be made by means of a process involving the co-injection moulding of different synthetic materials. Co-injection moulding involves manufacturing a component using a press capable of injecting at least two different synthetic materials simultaneously into the one mould.

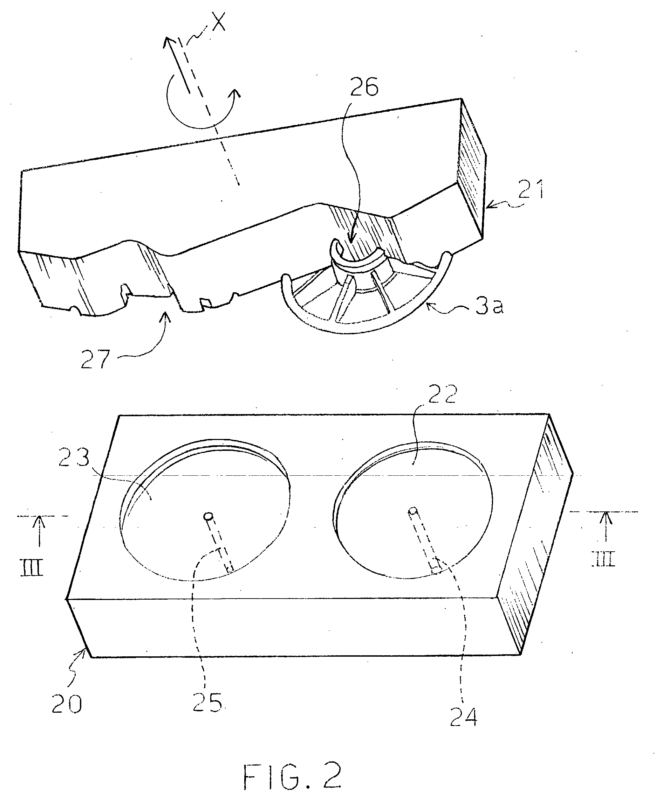

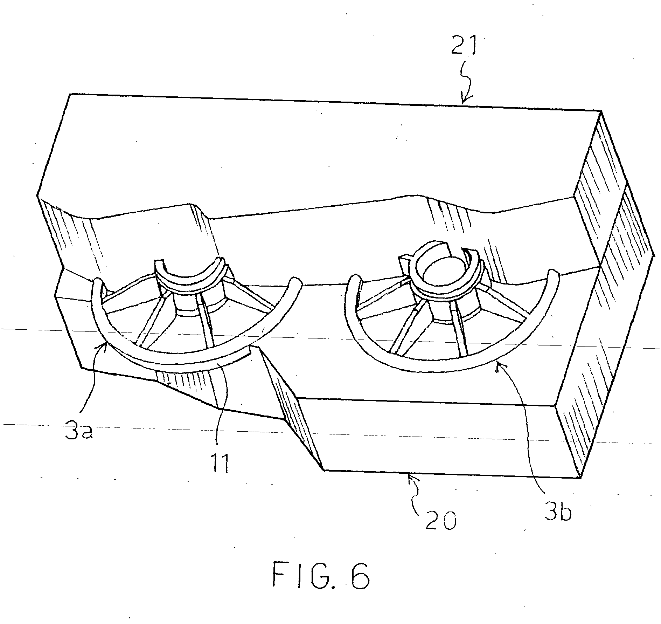

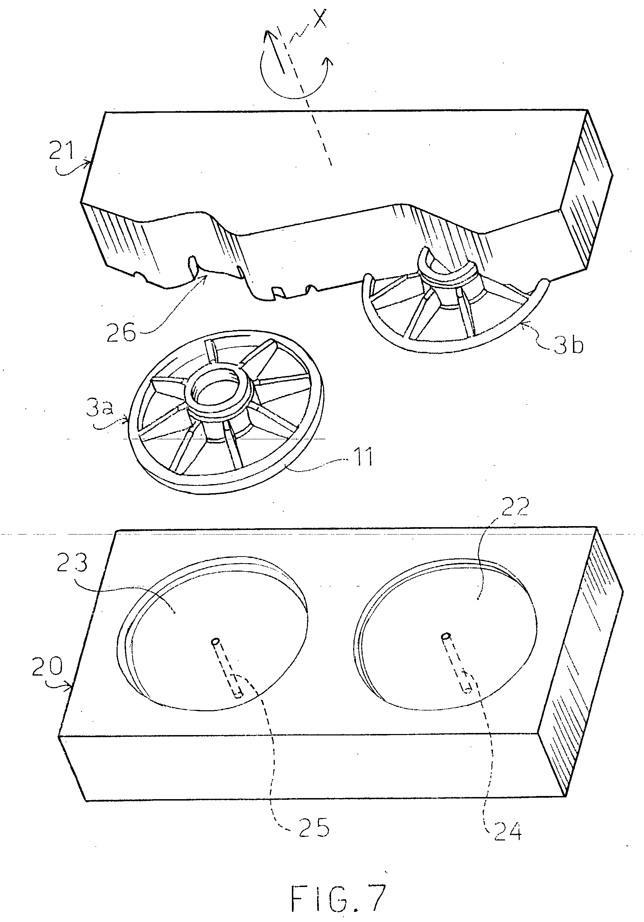

Figures 2 to 7 diagrammatically illustrate a manufacturing process of the second type mentioned above, in other words, a process for making a base block with the sole attached by co-injecting two different synthetic materials. In particular, the process described is of the type which uses a mould known as a rotating mould.

More specifically, a mould consists of two parts or halves: a fixed part of the mould, denoted 20, and a mobile part of the mould, denoted 21. In the diagrammatic example illustrated, the mould enables a base block to be moulded and the elastomeric sole to be overmoulded onto another base block simultaneously. However, this should not be taken as a limitation of the invention since an even greater degree of parallel processing could clearly be provided.

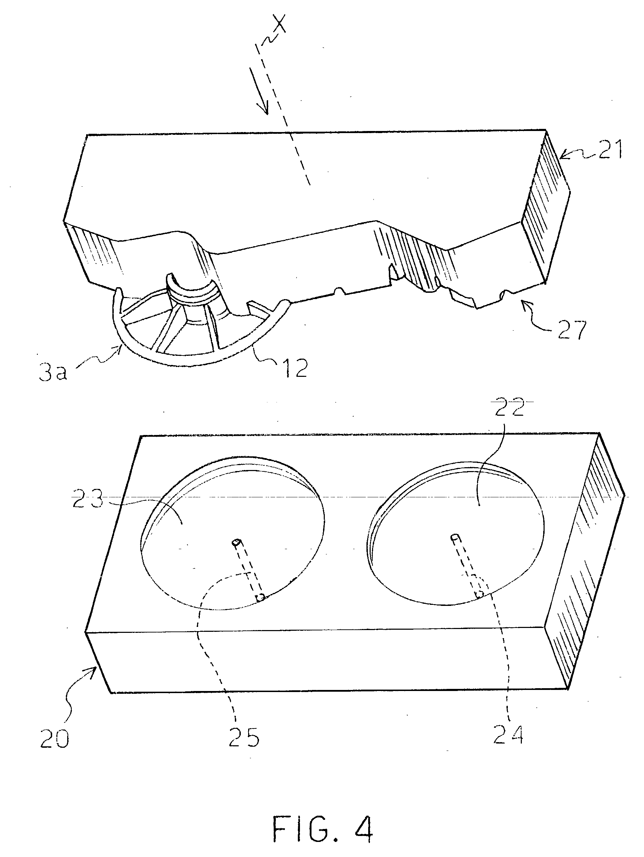

The fixed part 20 of the mould contains two cavities 22, 23 whose shape corresponds to that of the base block in plan view. As can be seen more clearly in Figure 3, which illustrates a section through the fixed part 20 of the mould taken on the plane III-III in figure 2, the cavity 23 is deeper than the cavity 22, this greater depth being needed, as will be evident later, to form the sole 11. Still with reference to the fixed part 20 of the mould, the two cavities 22, 23 each have a channel 24, 25 which opens up into the cavities 22; 23 in order to convey the synthetic material in the liquid phase.

The mobile part 21 of the mould, which is shown in a cut-away view, contains two cavities 26, 27 consisting of flow channels which define recesses or impressions which reproduce the shape of the base block in negative form.

The mobile part 21 of the mould can be moved in translation towards or away from the fixed part 20 and can also rotate with respect to the latter.

Figure 2 shows the mould with the mobile part 21 raised with respect to the fixed part 20 after a base block 3a has been formed inside the impression defined on the one hand by the cavity 22 and on the other by the cavity 26 of the two halves of the mould by injecting a synthetic material in liquid phase, for example glass-filled polyamide, in through the channel 24.

Once it has been raised with respect to the fixed part 20, the mobile part 21 of the mould is then rotated through 180° about an axis perpendicular to it (axis X in Figure 2) until the base block 3a is located above the cavity 23 in the fixed part 20, as shown in Figure 4.

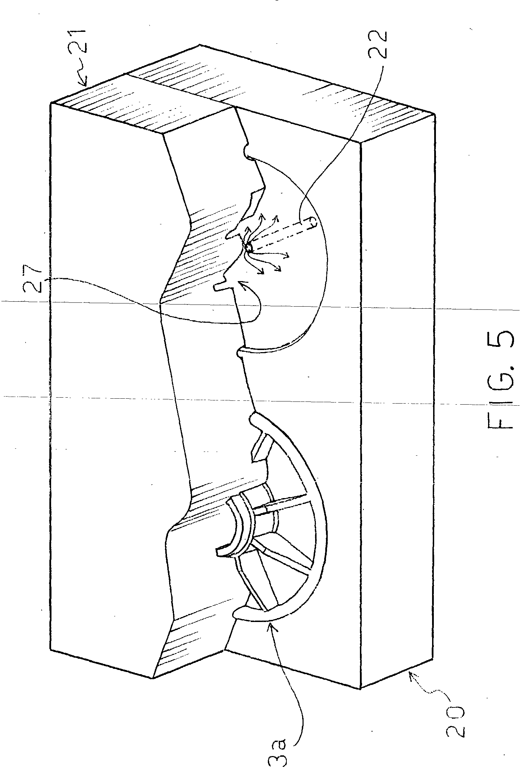

At this point the mobile part 21 is lowered and carefully placed on top of the fixed part 20, as shown in Figure 5. In this way, the base block 3a formed previously is placed inside the cavity 23 while the cavity 27 in the mobile part 21 of the mould is located above the cavity 22 and forms an impression with the latter.

The synthetic material which will form a new base block is then injected in the liquid phase through the channel 24; the said material fills the impression formed between the cavity 22 and the cavity 27, forming a new base block 3b.
At the same time, a different synthetic material, typically an elastomeric material such as for example thermoplastic rubber, vulcanized rubber or silicone rubber, is injected in the liquid phase through the channel 25; this material fills the space between the bottom surface of the previously formed base block 3a and the bottom of the cavity 23 which, as mentioned earlier, is deeper than the cavity 22. The elastomeric material adheres to the bottom surface of the base block 3a and thus forms a sole 11 which is intimately joined to the base block 3a. Indeed, when certain types of materials are used to make the base block and the sole, such as for example in the case of polyamides or polypropylenes and thermoplastic rubbers, there is actual chemical adhesion between the sole and the base block, so that a single piece is essentially formed.

The mobile part 21 of the mould is then once again lifted up from the fixed part 20. The base block 3a, which by this stage comes complete with sole 11, is removed from the mobile part 21 of the mould which is subjected to another rotation through 180° with respect to the axis X so that the new base block 3b is positioned above the cavity 23. At this point, the mobile part 21 of the mould is again lowered and the preceding stages are repeated. The process just described is merely one of the possible practical implementations of the present invention. Indeed, it would for example be possible to use a non-rotating mould and still remain within the scope of a co-injection moulding process.

Moreover, if suitable co-injection moulding equipment is not available, the support foot described could also be made by means of a two-stage injection moulding process, the base block being made in the first stage and the sole 11 being made in the second stage by overmoulding it on top of the base block.

## Claims

1. Process for manufacturing a support foot for heavy objects which comprises a base block (3; 3a, 3b) designed to rest on a support surface and having a sole (11) made of a synthetic material, characterized by providing for making the sole (11) by injection moulding the synthetic material onto a bottom surface of the base block.

2. Process according to Claim 1, in which the said synthetic material is an elastomeric material.

3. Process according to Claim 2, in which the said synthetic material is a thermoplastic rubber.

4. Process according to Claim 2, in which the said synthetic material is a vulcanized rubber.

5. Process according to Claim 2, in which the said elastomeric material is a silicone rubber.

6. Process according to any one of the preceding claims, in which the said base block (3; 3a, 3b) is made of synthetic material, but of a different type of synthetic material to that used to make the sole (11).

7. Process according to Claim 6, in which the base block (3; 3a, 3b) is made of polyamide, preferably glass-filled polyamide, or of polypropylene.

8. Process according to Claim 6 or 7, in which the said sole (11) is made by injection overmoulding the synthetic material on top of a base block manufactured previously.

9. Process according to Claim 8, in which the said base block (3; 3a, 3b) is in turn made by moulding a synthetic material.

10. Process according to any one of Claims 1 to 7, in which the sole (11) and the base block (3; 3a, 3b) are made by co-injection moulding the two synthetic materials in a single co-injection mould.

11. Process according to Claim 10, in which the said co-injection mould is of the rotating type.

12. Process according to claim 10, in which the said co-injection mould is of the non-rotating type.

13. Support foot for heavy objects, comprising a base block (3; 3a, 3b) designed to rest on a support surface and having a sole (11) made of a synthetic material, characterized in that the sole is moulded by injecting the synthetic material onto a bottom surface of the base block.
